# EUROPEAN PATENT APPLICATION

(11) **EP 1 890 504 A1**
(43) Date of publication of application: **20.02.2008**
(21) Application number: 07111815.2
(22) Date of filing: 05.07.2007
(51) Int. Cl.: H04Q 7/32

(54) **Apparatus and Method of Providing Packet Service Status Using Access Class Barred List in Mobile Communication System**

(30) Priority: 18.08.2006 KR 20060077973
(71) Applicant: Samsung Electronics Co., Ltd., Suwon-si, Gyeonggi-Do (KR)
(72) Inventor: CHUN, Young-Gun, Gyeonggi-do (KR)
(74) Representative: Zimmer, Franz-Josef

(57) **Abstract**

A packet service status providing method using an access class barred list in a mobile communication system, includes inspecting, by a mobile communication terminal whether there exists information which matches access class restriction information pre-stored to the mobile communication terminal in access class barred list information contained in a system information block (SIB) received over a network; providing a response containing packet service unavailable information in response to a packet service request when there exists the matching information; and outputting the provided packet service unavailable information.

## Description

The present invention relates generally to a mobile communication system, and in particular, to an apparatus and method for providing a Man Machine Interface (MMI) with a cause when a mobile communication terminal camping in a suitable cell migrates to another cell of access class restriction and then is unable to call for packet service due to the access class restriction.

A mobile communication terminal periodically transmits and receives data over a network from boot up to shutdown. To update data, the mobile communication terminal transmits the corresponding data over the network. Likewise, the network transmits the corresponding data to the mobile communication terminal to update the data. The mobile communication terminal performs a next process according to a prescribed scheme (i.e., communication protocol) by analyzing the data received from the network.

Particularly, the mobile communication terminal, when it is powered on, searches for a cell and performs a camping process when the cell is a suitable cell. In doing so, the mobile communication terminal can acquire position information from unique information of the current cell. The mobile communication terminal receives a System Information Block (SIB) broadcasted by its camping cell on a periodic basis and carries out the next process according to the prescribed scheme based on the received SIB.

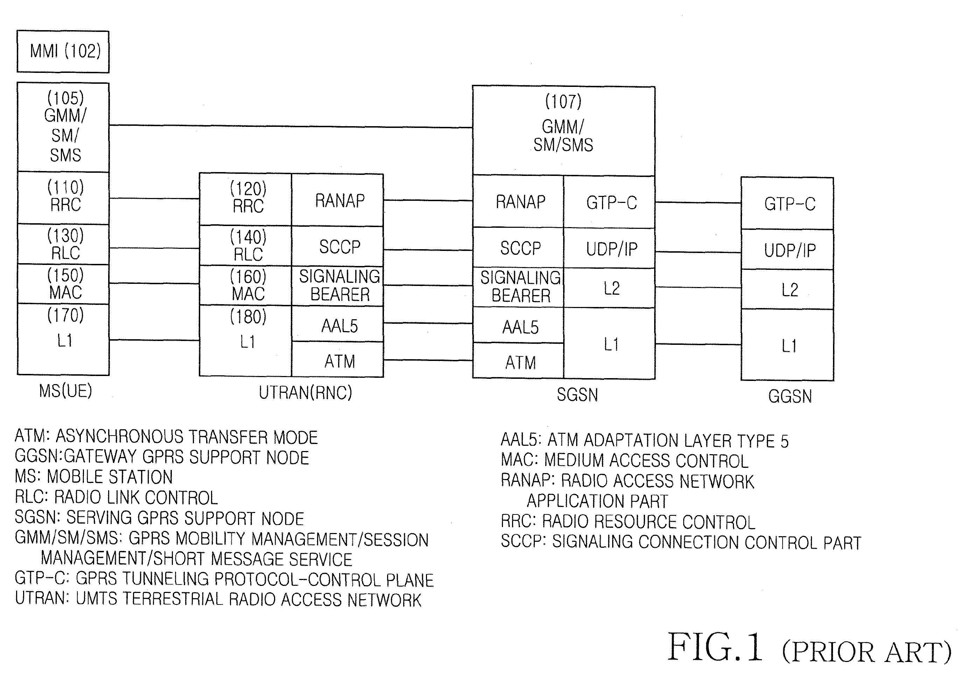

FIG. 1 depicts a layer structure of a general mobile communication system.

In FIG. 1, a Radio Network Controller (RNC) and a mobile communication terminal communicate using Radio Resource Control (RRC) layers 110 and 120, Radio Link Control (RLC) layers 130 and 140, Medium Access Control (MAC) layers 150 and 160, and physical layers (L1) 170 and 180 respectively.

The physical layers 170 and 180, which are the communication protocol of the first layer, correspond to electrical and mechanical interfaces with respect to the communication medium. The physical layer is responsible to convert data for access communication and access release to signals communicable by equipment of the mobile communication system. The MAC layers 150 and 160 and the RLC layers 130 and 140, which are the communication protocol of layer 2, carry out logical access, connection control, and error control. The RRC layers 110 and 120, which are the communication protocol of layer 3, are responsible to set and control the physical layers 170 and 180, the MAC layers 150 and 160, and the RLC layers 130 and 140 by exchanging control messages.

General Packet Radio Service (GPRS) Mobility Management (GMM) layer 105, which lies above the RRC layer 110, manages a session according to movement in the GPRS mode of the mobile communication terminal in association with Serving GPRS Support Node (SGSN) or Gateway GPRS Support Node (GGSN).

Man Machine Interface (MMI) 102 displays the current state of the mobile communication terminal by communicating with the GMM layer 105, or provides a specific input from the user to its lower layer. The GGSN operates in association with the mobile communication terminal through the SGSN and serves as a router interconnecting with the mobile communication terminal.

In the SIB, when access class restriction information set in an access class barred list in cell restriction information contained in the SIB 3 matches access class restriction information stored on a Subscriber Identity Module (SIM) card of the mobile communication terminal, the RRC layer 110 of the mobile communication terminal reports this match to the GMM layer 105. The SIB is transferred to and analyzed at the RRC layer 110, and then provided to the GMM layer 105.

The GMM layer 105 reports to the upper MMI 102 that only limited service is available when it determines the infeasibility of a successful registration. In the limited service status, only an emergency call is allowed, whereas a normal call is not allowed.

If service demand exceeds Base Station (BS) capacity because of too many subscribers at a given time, the BS can set the access class restriction to the currently managing cell.

However, up to now, the MMI 102 cannot acquire the cause as to why the mobile communication terminal receives the limited service. This is because, in this status, the GMM layer 105 provides no response even when the MMI 102 requests the service (data communication service) to the GMM layer 105. Since the user of the mobile communication terminal cannot acquire the cause of the out-of-service status, it is hard to know whether the out-of-service status results from the mobile communication terminal or the resource state of the current cell.

The present invention has been designed to substantially solve at least the above problems and/or disadvantages and to provide at least the advantages below. Accordingly, the object of the present invention is to provide a packet service status providing apparatus and method using an access class barred list in a mobile communication system.

This object is solved by the subject matter of the independent claims.

Preferred embodiments are defined in the dependent claims.

An aspect of the present invention is to provide an apparatus and method for providing access class restriction information to a Man Machine Interface (MMI) when a mobile communication terminal migrates to a suitable cell where access class restriction is set.

A further aspect of the present invention is to provide an apparatus and method for informing a user of service unavailable information due to access class restriction when a mobile communication terminal migrates to a suitable cell where the access class restriction is set.

The above aspects are achieved by providing a packet service status providing method using an access class barred list in a mobile communication system, which includes inspecting, by a mobile communication terminal which migrates from a specific cell to another cell, whether there exists information which matches access class restriction information pre-stored in the mobile communication terminal in access class barred list information contained in a system information block (SIB) received over a network; providing a response containing packet service unavailable information in response to a packet service request when there exists the matching information; and displaying the provided packet service unavailable information.

According to one aspect of the present invention, a packet service status providing apparatus using an access class barred list in a mobile communication system, includes a cell restriction information processor for providing a response containing packet service unavailable information in response to a packet service request when there exists matching information between access class barred list information contained in a received SIB and pre-stored access class restriction information; a user interface for displaying the packet service unavailable information provided from the cell restriction information processor, and requesting the packet service to the cell restriction information processor when the packet service is requested from a user; and a controller for receiving the SIB over a network, providing the SIB to the cell restriction information processor, controlling the cell restriction information processor to inspect whether there exists a restriction relating to resource access in the cell, and controlling to provide the restriction to the user interface when there exists the restriction.

According to another aspect of the present invention, a packet service status providing system using an access class barred list in a mobile communication system, includes a network apparatus for setting an access class restriction to a currently managing cell and broadcasting an SIB containing the access class restriction when a packet service exceeding a Base Station (BS) capacity is requested; and a mobile communication terminal for displaying and providing packet service unavailable information when there exists matching information between access class barred list information contained in the SIB and pre-stored access class restriction information.

The present invention will become more apparent from the following detailed description when taken in conjunction with the accompanying drawings in which:
FIG. 1 depicts a layer structure of a general mobile communication system;
FIG. 2 is a block diagram of a mobile communication terminal according to the present invention;
FIG. 3 is flowchart outlining a packet service status providing method using an access class barred list according to the present invention;
FIG. 4 is a message flow diagram of the packet service status method according to the present invention;
FIG. 5 depicts a packet service status displaying screen according to the present invention; and
FIG. 6 depicts a session management cause value according to the present invention.

Preferred embodiments of the present invention will be described herein below with reference to the accompanying drawings. In the following description, well-known functions or constructions are not described in detail since they would obscure the invention in unnecessary detail.

The present invention provides a packet service status providing apparatus and method using an access class barred list in a mobile communication system.

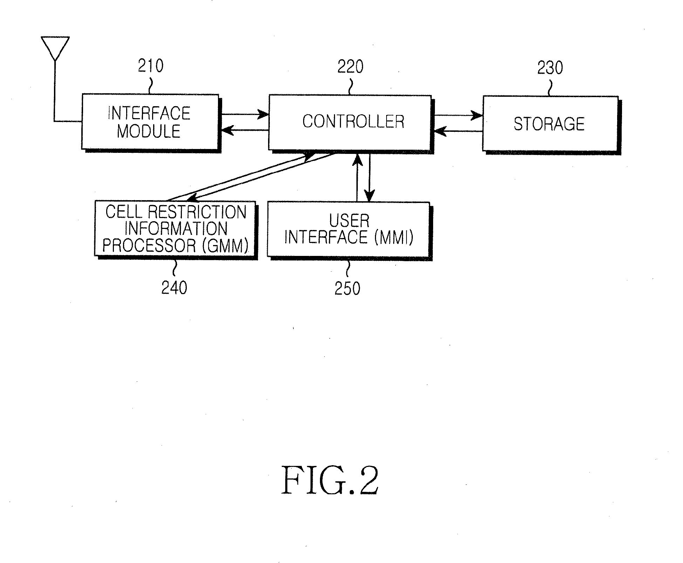

FIG. 2 is a block diagram of a mobile communication terminal according to the present invention.

In FIG. 2, a controller 220 receives a system information block (SIB) including access class restriction information which is periodically broadcast over a network of the currently camping cell, from an interface module 210 and provides the received SIB to a cell restriction information processor 240. When there is matching information between the access class restriction information and information stored on a SIM card of the mobile communication terminal and a request for packet service is received from a user interface 250, the controller 220 controls the cell restriction information processor 240 to provide the user interface 250 with packet service unavailable information. The user interface 250 can include a Man Machine Interface (MMI).

When there exists matching information between the access class information and the information stored on the SIM card of the mobile communication terminal and the packet service is requested from the MMI 250, the cell restriction information processor 240 provides the packet service unavailable information to the MMI 250 according to the direction and the information from the controller 220. The cell restriction information processor 240 may belong to the GMM layer.

The MMI 250 serves as an interface between a user and the mobile communication terminal. Particularly, when receiving the packet service unavailable information from the cell restriction information processor 240, the MMI 250 displays whether the packet service is restricted or not.

A storage 230 stores programs to control overall operation of the mobile communication terminal and temporary data generated in the program execution. The SIM card can be included in the storage 230.

The interface module 210, which is for communication with another node, includes a radio frequency (RF) processor and a baseband processor. The RF processor converts a signal received by an antenna to a baseband signal and provides the converted signal to the baseband processor. Also, the RF processor converts a baseband signal fed from the baseband processor to an RF signal transmittable over the air and transmits the converted signal by the antenna.

In addition, the controller 220 can function as the cell restriction information processor 240 and the MMI 250. According to the present invention as shown in FIG. 2, the cell restriction information processor 240 and the MMI 250 are separately provided to explain their functions. Hence, in the implementation, both or part of the cell restriction information processor 240 and the MMI 250 can be included in the controller 220.

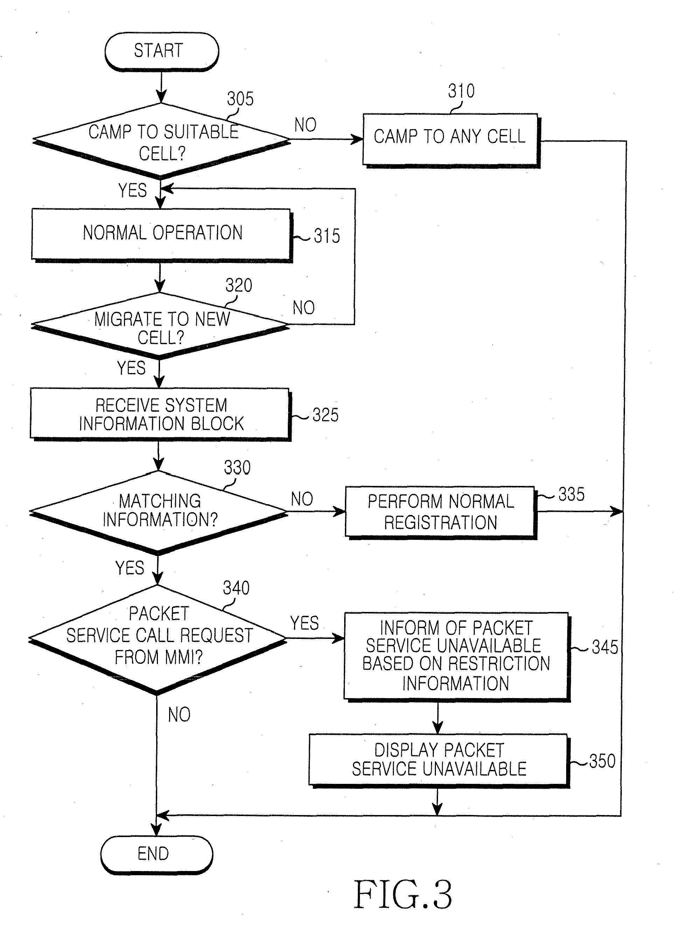

FIG. 3 is flowchart outlining a service status providing method using an access class barred list according to the present invention.

In FIG. 3, the controller of the mobile communication terminal, after it is powered on, controls the lower physical layer to commence the scanning of the radio frequency to search an available camping cell at the current position of the terminal.

When the controller cannot search and camp in the suitable cell in step 305, camping to any cell is performed in step 310. Any cell indicates an available camping cell.

When the controller can search and camp in the suitable cell in step 305, the controller carries out a normal operation such as standby in an idle state or calling in step 315. As migrating to a new cell in step 320, the mobile communication terminal acquires an SIB by analyzing a Broadcast CHannel (BCH) containing the SIB which informs of the current cell state in step 325. Although not shown in the drawing, the controller receives the SIB after camping to a cell by camping to any cell process in step 310, when the mobile communication terminal can not camp in the suitable cell in step 305.

In step 330, the controller controls the cell restriction information processor to inspect whether there exists information which matches the information stored on to the SIM card in the access class barred list information set in the cell restriction information of the SIB.

When there is no matching restriction information, the controller performs a normal registration in step 335.

When there is matching restriction information, the controller checks whether packet service is requested from the MMI in step 340.

When receiving the request for the packet service in step 340, the controller provides packet service unavailable information to the MMI based on the access class restriction information in step 345.

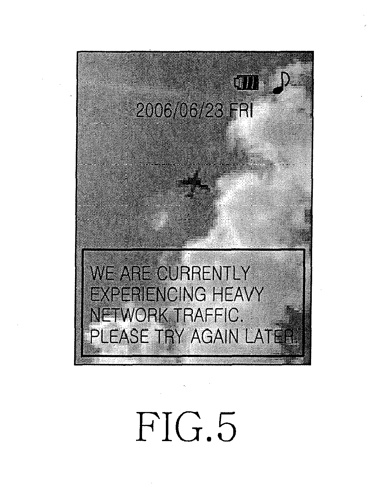

Next, the MMI displays the packet service unavailable information as shown in FIG. 5 in step 350.

Then, the process of the present invention is ended.

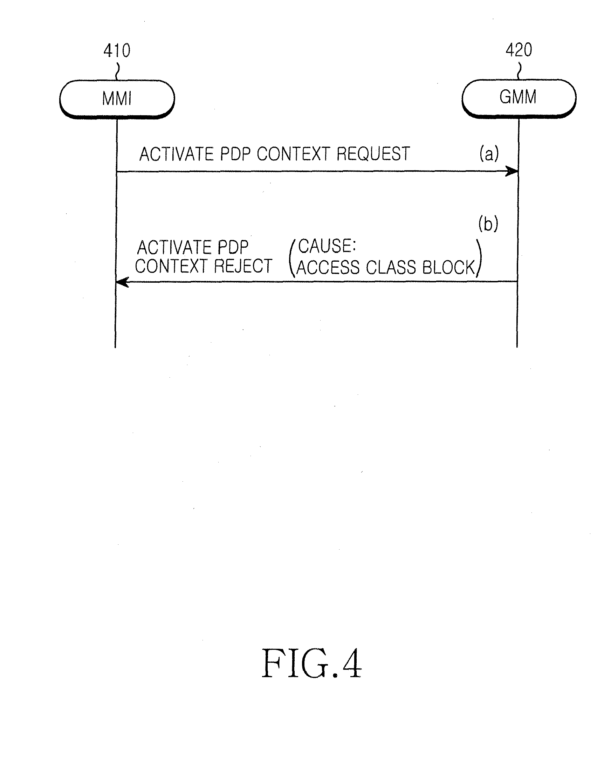

FIG. 4 is a message flow diagram of the packet service status method according to the present invention.

In FIG. 4, when the user requests the packet service, MMI 410 requests a call setup for the packet service by providing an "Active PDP Context Activation" message to GMM layer 420 in step (a). The "Active PDP Context Activation" message is to request the packet service by requesting the activation of information for the packet service, which is Packet Data Protocol (PDP) information, by the mobile communication terminal. The information for the packet service contains, for example, an IP address allocated for IP communications.

If the packet service is unavailable because of the access class restriction, the GMM 420 provides the MMI 410 with an "Activate PDP Context Reject" message containing a session management (SM) cause value which is the access class block indicating the packet service unavailability in step (b).

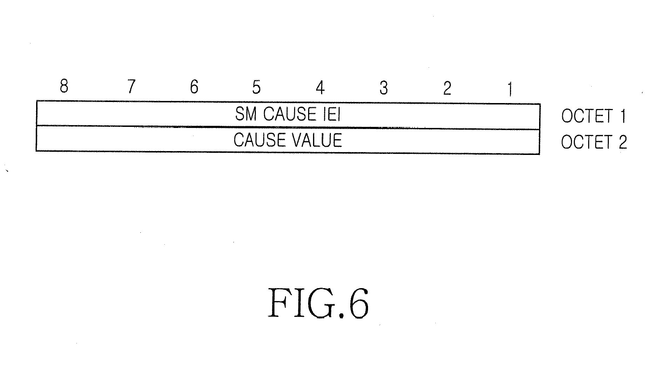

The session management cause value consists of 2 bytes as shown in FIG. 6, and specifically, a 1-byte Information Element Identifier (IEI) and a 1-byte cause value.

As set forth above, the packet service unavailability of the mobile communication terminal is provided to and displayed at the MMI. Therefore, when the mobile communication terminal cannot receive the packet service, it can acquire the accurate cause of the unavailable packet service.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While the invention has been shown and described with reference to certain preferred embodiments thereof, it will be understood by those skilled in the art that various changes in form and details may be made therein without departing from the scope of the invention as defined by the appended claims.

## Claims

1. A packet service status providing method using an access class barred list in a mobile communication system, the method comprising:
inspecting, by a mobile communication terminal, whether there exists information which matches access class restriction information pre-stored in the mobile communication terminal in access class barred list information contained in a system information block received over a network;
providing a response containing packet service unavailable information in response to a packet service request when there exists the matching information.

2. The packet service status providing method of claim 1, further comprising:
outputting the provided packet service unavailable information.

3. The packet service status providing method of claim 1 or 2, further comprising:
performing a normal registration when there exists no matching information.

4. The packet service status providing method of one of claims 1 to 3, wherein the system information block can be received periodically over a network.

5. A packet service status providing apparatus using an access class barred list in a mobile communication system, comprising:
a cell restriction information processor for providing a response containing packet service unavailable information in response to a packet service request when there exists matching information between access class barred list information contained in a received system information block and pre-stored access class restriction information;
a user interface for outputting the packet service unavailable information provided from the cell restriction information processor, and requesting the packet service to the cell restriction information processor when the packet service is requested from a user; and
a controller for receiving the system information block over a network, providing the system information block to the cell restriction information processor, controlling the cell restriction information processor to inspect whether there exists a restriction relating to resource access in the cell, and providing the restriction to the user interface when there exists the restriction.

6. The packet service status providing apparatus of claim 5, wherein the controller performs a normal registration when there is no matching information in the access class restriction information.

7. The packet service status providing apparatus of claim 5 or 6, wherein the system information block can be received periodically over a network.

8. A packet service status providing system using an access class barred list in a mobile communication system, comprising:
a network apparatus for setting an access class restriction to a currently managing cell and broadcasting a system information block containing the access class restriction when providing a packet service is unavailable; and
a mobile communication terminal for outputting and providing packet service unavailable information when there exists matching information between access class barred list information contained in the system information block and pre-stored access class restriction information.

9. The packet service status providing system of claim 8, wherein the mobile communication terminal outputs the packet service unavailable information due to the access class restriction when a packet service is requested from a user when there exists matching information in the access class restriction information.

10. The packet service status providing system of claim 8 or 9, wherein the system information block can be received periodically over a network.

11. A packet service status providing method of a mobile communication terminal using an access class barred list in a mobile communication system, the method comprising:
inspecting whether there exists information which matches access class restriction information pre-stored in the mobile communication terminal in access class barred list information contained in a system information block received over a network;
generating a response containing packet service unavailable information in response to a packet service request from a user when there exists the matching information.

12. The packet service status providing method of claim 11, further comprising:
outputting the generated packet service unavailable information.

13. The packet service status providing method of claim 11 or 12, further comprising:
performing a normal registration when there exists no matching information.

14. The packet service status providing method of claim 11, wherein the system information block can be received periodically over a network.

15. A Computer-readable recording medium having recorded thereon a program for a packet service status providing in a mobile communication system, comprising;
a first code segment, for inspecting whether there exists information which matches access class restriction information pre-stored in the mobile communication terminal in access class barred list information contained in a system information block received over a network; and
a second code segment, for generating a response containing packet service unavailable information in response to a packet service request from a user when there exists the matching information.

16. The computer-readable recording medium of claim 15, further comprising;
a third code segment for outputting the generated packet service unavailable information.

17. The computer-readable recording medium of claim 15 or 16, further comprising;
a fourth code segment for performing a normal registration when there exists no matching information.

18. The computer-readable recording medium of one of claims 15 to 17, wherein the system information block can be received periodically over a network.
